(19) Europäisches Patentamt
European Patent Office
Office européen des brevets

(11) Veröffentlichungsnummer: **0 186 812**
**B1**

(12) # EUROPÄISCHE PATENTSCHRIFT

(45) Veröffentlichungstag der Patentschrift: **25.01.89**

(51) Int. Cl.[4]: **C 09 B 62/513,** C 09 B 62/25, D 06 P 1/38

(21) Anmeldenummer: **85115635.6**

(22) Anmeldetag: **09.12.85**

(54) **Reaktivfarbstoffe.**

(30) Priorität: **20.12.84 DE 3446555**

(43) Veröffentlichungstag der Anmeldung: **09.07.86 Patentblatt 86/28**

(45) Bekanntmachung des Hinweises auf die Patenterteilung: **25.01.89 Patentblatt 89/4**

(84) Benannte Vertragsstaaten: **CH DE FR GB LI**

(56) Entgegenhaltungen:
**EP-A-0 084 314**
**EP-A-0 128 340**
**DE-A-3 113 473**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**

**EP 0 186 812 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft neue Disazoreaktivfarbstoffe, die in Form der freien Säure der Formel (1) entsprechen

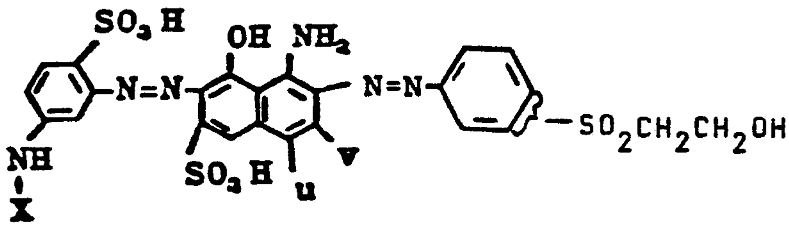

(1)

worin

X = Rest einer Reaktivkomponente der Pyrimidinreihe, der mindestens ein reaktives Fluoratom enthält

u, v = H, $SO_3H$, wobei u $\neq$ v.

Geeignete Pyrimidinreste X, die mindestens einen unter Färbebedingungen abspaltbaren Fluorsubstituenten enthalten, sind beispielsweise folgende:

2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbon-amido-4-pyrimidinyl-, 2-Fluor-6-carbomethoxy-4-pyrimidinyl-, 2-Fluor-6-cyan-pyrimidinyl-, 2,6-Difluor-6-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 5,6-Difluorpyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methylsulfonyl-pyrimidinyl-4, 6-Fluor-5-phenyl-sulfonyl-pyrimidinyl-4.

Im Rahmen der Formel (1) sind folgende Farbstoffe bevorzugt:

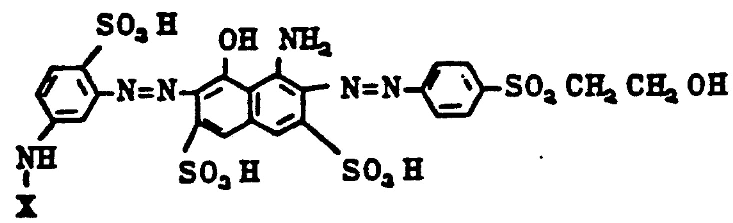

(2)

Weiterhin solche der Formel (1) und (2), in denen X für folgende Reste steht:

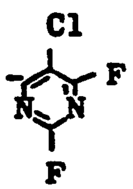 , 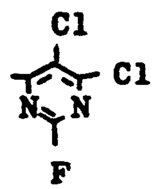 , 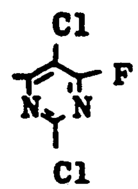 , 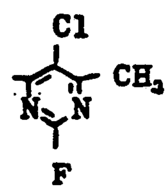

Gegenstand der Erfindung sind weiterhin Verfahren zur Herstellung der Farbstoffe der Formel (1).

Im einzelnen sind zu nennen:

1) Ein Amin der Formel

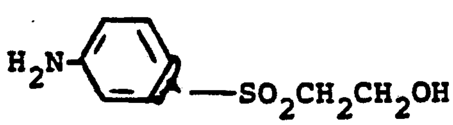

(3)

wird diazotiert, mit einer Aminohydroxynaphthalindisulfonsäure der Formel

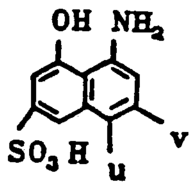

(4)

zu einer Verbindung der Formel

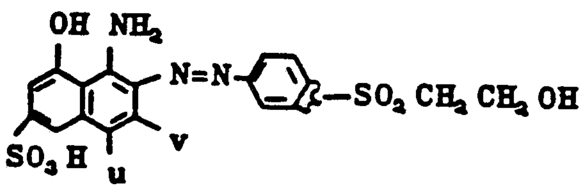

(5)

im sauren Medium gekuppelt, und dieser Monoazofarbstoff wird mit der aus einem Amin der Formel

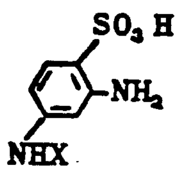

(6)

hergestellten Diazoniumverbindung im neutralen Medium zu einem Farbstoff der Formel (1) vereinigt.

2) Ein Amino-disazofarbstoff der Formel

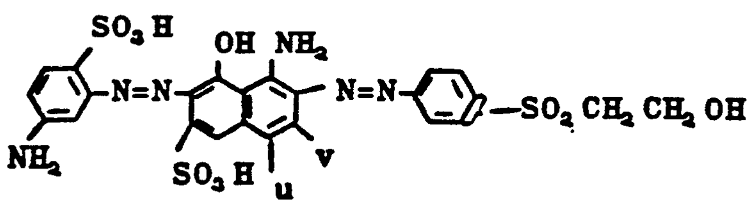

(7)

wird mit einer durch mindestens zwei Fluoratome substituierten Pyrimidinverbindung der Formel

X - F (8)

worin

F = Fluor

X = Pyrimidinrest mit mindestens einem reaktiven Fluoratom

unter Abspaltung von Flußsäure kondensiert.

In den Verbindungen der Formeln (2) bis (8) haben X, u und v die oben angegebene Bedeutung. Die Reaktionsbedingungen der Herstellung entsprechen dem auf dem Gebiet der Acylierung, Diazotierung und Kupplung von Farbstoffen üblichen Bedingungen.

Als Ausgangsverbindungen zur Herstellung der Reaktivfarbstoffe der Formel (1) können beispielsweise genannt werden:

a) Kupplungskomponenten der Formel (4)

1-Amino-8-hydroxynaphthalin-3,6-disulfonsäure,

1-Amino-8-hydroxynaphthalin-4,6-disulfonsäure.

b) Amine der Formel (3)

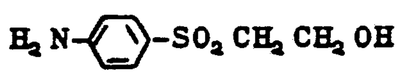

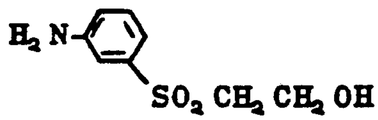

c) Pyrimidine der Formel (8)

2,4-Difluor-6-methylpyrimidin, 2,6-Difluor-4-methyl-5-chlorpyrimidin, 2,4-Difluor-pyrimidin-5-ethyl-sulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichloroder -dibrompyrimidin, 4,6-Difluor-2,5-dichlor- oder -di-brompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluor-pyrimidin-5-carbonsäurealkylester oder -5-carbon-säureamide, 2,6-Difluor-5-methyl-4-chlorpyrimidin, 2,6-Difluor-5-chlorpyrimidin, 2,4,6-Trifluor-5-methylpyrimidin, 2,4-Difluor-5-nitro-chlorpyrimidin, 2,4-Difluor-5-cyanpyrimidin, 2,4-Difluor-5-methyl-pyrimidin, 6-Trifluormethyl-5-chlor-2,4-difluor-pyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin, 4,6-Difluor-5-chlorpyrimidin, 4,6-Difluor-5-trifluormethyl-pyrimidin, 4,6-Difluor-2-methyl-pyrimidin, 4,6-Difluor-5-chlor-2-methylpyrimidin, 4,5,6-Trifluor-pyrimidin, 4,6-Difluor-5-chlor-2-trifluor-methyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenyl-sulfonyl-pyrimidin.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrockung des ganzen Herstellungsgemisches kann man in gewissen Fällen die erfindungsgemäßen trockenen Präparate direkt, d.h. ohne Zwischenisolierung der Farbstoffe herstellen.

Die Reaktivfarbstoffe der Formel (1) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Reaktive Disazoverbindungen sind aus DE-A-3 113 473 bekannt.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

**Beispiel 1**

53,1 g des Farbstoffs der Formel

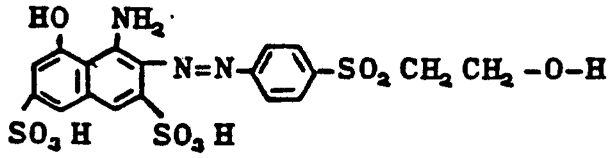

werden bei pH 6 - 7 mit der Diazoniumverbindung aus 33,7 g des Kondensationsproduktes von 18,8 g 1,3-Diaminobenzol-6-sulfonsäure mit 17 g 2,4,6-Trifluor-5-chlor-pyrimidin zu einem dunkelblauen Farbstoff gekuppelt. Nach Aussalzen, Isolieren, Trocknen und Mahlen fällt der Farbstoff der Formel

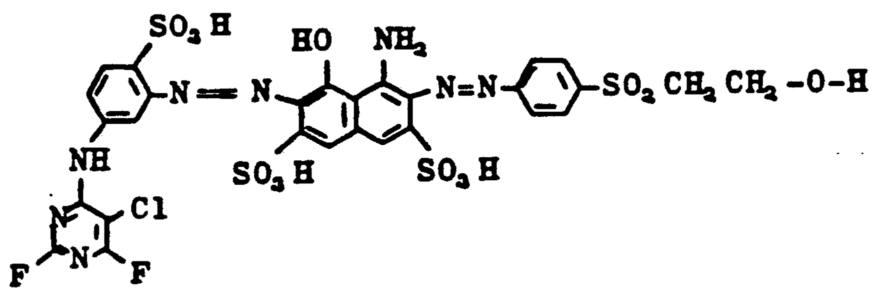

als dunkles Pulver an, der sich in Wasser mit blauer Farbe löst und Baumwolle in marineblauen (28) bis schwarzen Tönen färbt.

Weitere Reaktivfarbstoffe, die Baumwolle marineblau färben (Farbkennzahl 28), erhält man nach der geschilderten Arbeitsweise, wenn man anstelle von 2,4,6-Trifluor-5-chlor-pyrimidin eine äquimolare Menge der folgenden Reaktivkomponenten verwendet

2,4,6-Trifluor-5-chlor-pyrimidin,
2,4-Difluor-5,6-dichlor-pyrimidin,
2,4-Difluor-5-chlor-6-methyl-pyrimidin,
4,6-Difluor-2,5-dichlor-pyrimidin.

**Beispiel 2**

73 g des Farbstoffs der Formel

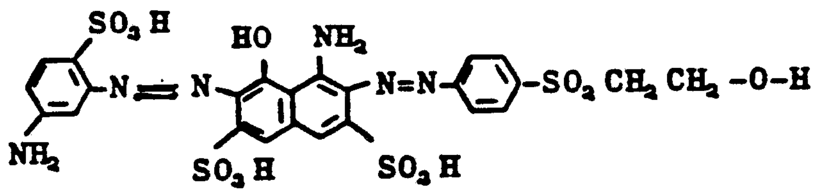

werden in 1000 ml Eiswasser gelöst. Man tropft 16,8 g 2,4,6-Trifluor-5-chlor-pyrimidin ein und hält durch gleichzeitige Zugabe von 15 %-iger Sodalösung den pH zwischen 6 und 6,5. Nach beendeter Kondensation wird der Ansatz sprühgetrocknet. Man erhält ein leicht in Wasser mit blauer Farbe lösliches Pulver, das Baumwolle in marineblauen (28) bis schwarzen Tönen färbt.

Der Farbstoff entspricht der Formel

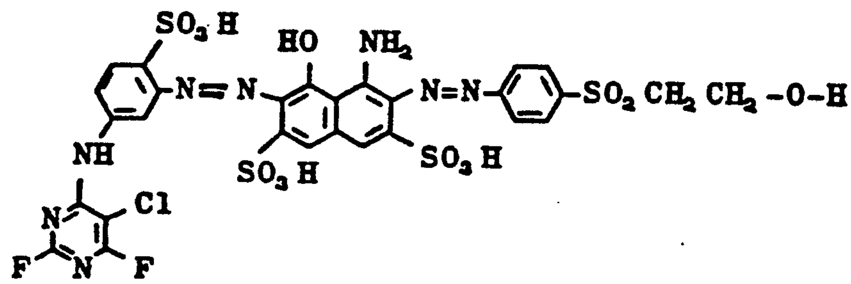

Er ist identisch mit dem nach Beispiel 1 erhaltenen Produkt.

**Patentansprüche**

1. Disazoreaktivfarbstoffe, die in Form der freien Säure der Formel entsprechen,

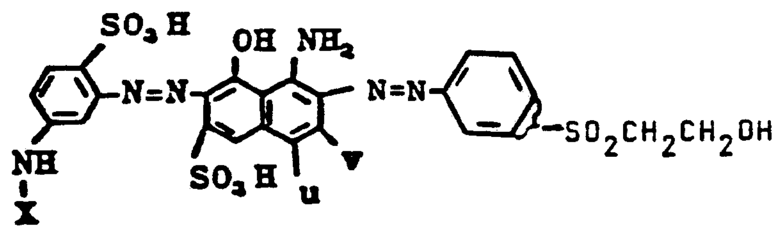

worin
X = Rest einer Reaktivkomponente der Pyrimidinreihe, der mindestens ein reaktives Fluoratom enthält,
u, v = H, $SO_3H$, wobei u ≠ v.

2. Farbstoffe des Anspruchs 1 der Formel

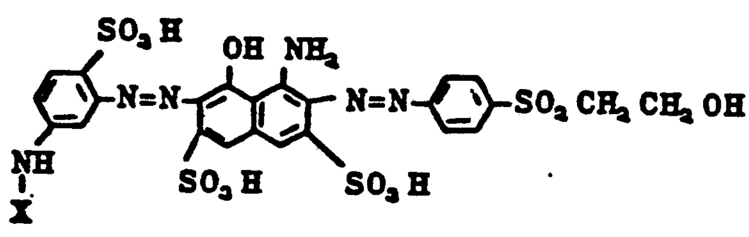

3. Farbstoffe der Ansprüche 1 und 2, worin X für folgende Reste steht:

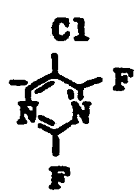 , 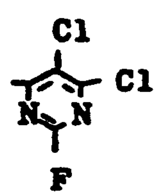 , 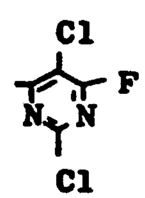 , 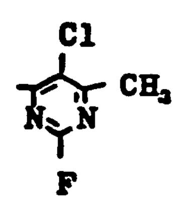 .

4. Verwendung der Farbstoffe der Ansprüche 1 bis 3 Zum Färben und Bedrucken von Hydroxyl- oder Amidgruppen enthaltenden Materialien.

5. Mit den Farbstoffen der Ansprüche 1 - 3 gefärbte oder bedruckte Hydroxyl- oder Amidgruppen enthaltende Materialien.

## Claims

1. Disazoreactive dyestuffs which, in the form of the free acid, conform to the formula

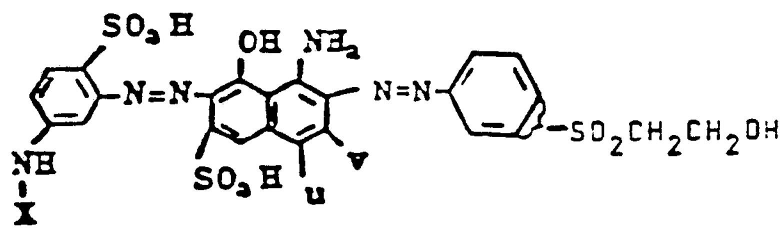

wherein

X = radical of a reactive component of the pyrimidine series which contains at least one reactive fluorine atom,

u, v H, $SO_3H$, where u ≠ v.

2. Dyestuffs of Claim 1 of the formula

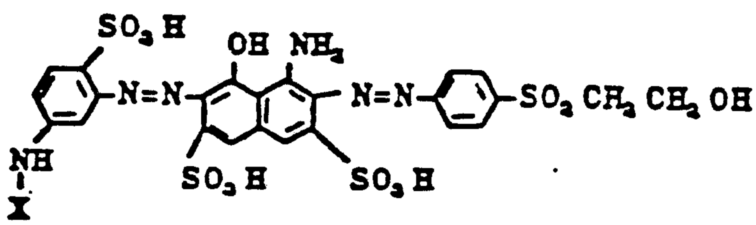

3. Dyestuffs of Claims 1 and 2, wherein X stands for the following radicals:

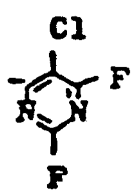 , 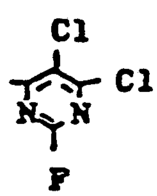 , 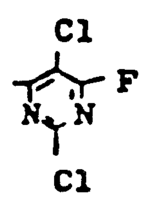 , 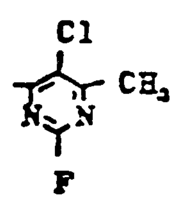 .

4. Use of the dyestuffs of Claims 1 to 3 for dyeing and printing hydroxyl- or amido-containing materials.

5. Hydroxyl- or amido-containing materials dyed or printed with the dyestuffs of claims 1 - 3.

**Revendications**

1. Colorants réactifs disazoïques qui, sous la forme de l'acide libre, répondent à la formule

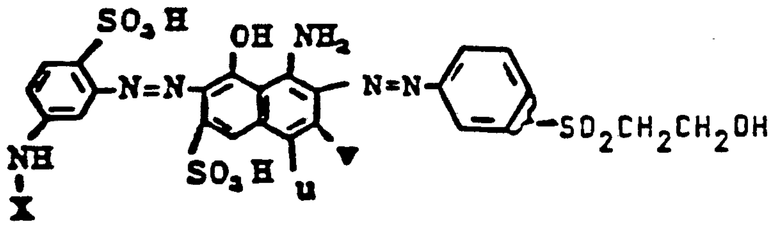

dans laquelle

X est le reste d'un composant réactif de la série de la pyrimidine, qui contient au moins un atome réactif de fluor,

u, v représentent H, $SO_3H$, u étant différent de v.

2. Colorants suivant la revendication 1, de formule

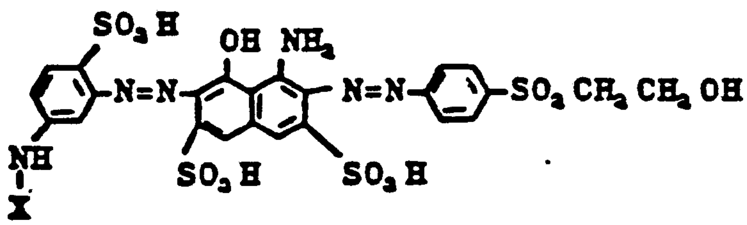

.

3. Colorants suivant les revendications 1 et 2, dans la formule desquels X représente les restes suivants:

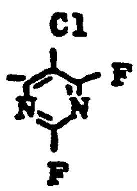 , 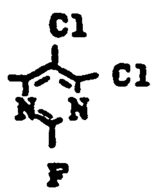 , 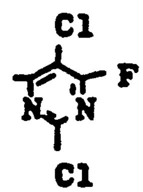 , 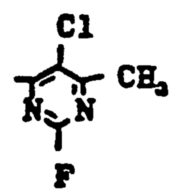 .

4. Utilisation des colorants suivant les revendications 1 à 3 pour la teinture et l'impression de matières contenant des groupes hydroxyle ou amide.

5. Des matières contenant des groupes hydroxyle ou amide, teintes ou imprimées avec les colorants suivant les revendications 1 à 3.